**Europäisches Patentamt**

**European Patent Office**

**Office européen des brevets**

(19)

(11) Veröffentlichungsnummer: **0 218 895**
**B1**

(12) **EUROPÄISCHE PATENTSCHRIFT**

(45) Veröffentlichungstag der Patentschrift:
**07.12.88**

(51) Int. Cl.⁴: **F 02 M 51/06**

(21) Anmeldenummer: **86112267.9**

(22) Anmeldetag: **04.09.86**

(54) **Zumessventil zur Dosierung von Flüssigkeiten oder Gasen.**

(30) Priorität: **17.09.85 DE 3533085**

(43) Veröffentlichungstag der Anmeldung:
**22.04.87 Patentblatt 87/17**

(45) Bekanntmachung des Hinweises auf die Patenterteilung:
**07.12.88 Patentblatt 88/49**

(84) Benannte Vertragsstaaten:
**DE FR GB**

(56) Entgegenhaltungen:
**DE-A- 1 263 396**
**DE-A- 1 751 543**
**DE-A- 2 917 933**
**DE-A- 3 422 935**
**DE-U- 1 922 299**
**FR-A- 2 491 270**
**GB-A- 2 056 559**
**US-A- 4 022 166**

(73) Patentinhaber: **ROBERT BOSCH GMBH, Postfach 50,**
**D-7000 Stuttgart 1 (DE)**

(72) Erfinder: **Trachte, Dietrich, Rua Viscondessa de**
**Campinas 251, 13 100 Campinas Sao Paulo (BR)**

ACTORUM AG

## Beschreibung

### Stand der Technik

Die Erfindung geht aus von einem Zumessventil zur Dosierung von Flüssigkeiten oder Gasen, insbesondere Einspritzventil für Kraftstoff-Einspritzsysteme in Brennkraftmaschinen, wie direkt einspritzende Dieselmotoren und dgl., nach der Gattung des Anspruchs 1.

Bei einem bekannten Zumessventil dieser Art (GB-A-2 056 559) ist das piezoelektrische Stellglied so aufgebaut, dass die Ventilnadel zur Freigabe der Zumessöffnung durch eine Kontraktion des Piezostacks von dem Ventilsitz abgehoben wird. Die gehäuseseitig sich abstützende Ventilschliessfeder zur Rückführung der Ventilnadel in die Ventilschliessstellung greift an der vom Piezostack abgekehrten Rückseite des Dämpfungskolbens an und liegt in dem mit dem Kraftstoffzulauf verbundenen Dämpfungsraum ein. Die Masse des Dämpfungskolbens und die Dämpfungswirkung des Kraftstoffes in dem Dämpfungsraum ist so gross bemessen, dass während der kurzen Kontraktionsphase des Piezostacks der Dämpfungskolben stationär festliegt und sich nicht unter dem Einfluss der Ventilschliessfeder in Ventilschliessrichtung bewegt. In jeder Zumessphase führt damit die Ventilnadel den gleichen Öffnungshub aus. Ist das Ventil geschlossen, so bewirken Längenänderungen insbesondere im Piezostack infolge von Temperaturschwankungen eine Verschiebung des Dämpfungskolbens. In gleicher Weise werden auch Verschleiss und Fertigungstoleranzen in dem von Ventilnadel, Piezostack und Dämpfungskolben gebildete Betätigungssystem ausgeglichen. Diese Erscheinungen können damit nicht den Stellweg der Ventilnadel relativ zu der Zumessöffnung beeinflussen.

Es hat sich gezeigt, dass dieses Konstruktionsprinzip der momentanen gehäuseseitigen Festlegung des Piezostacks während der Zumessphase sich nicht auf solche piezoelektrische Stellglieder übertragen lässt, bei welchen eine Längenausdehnung des Piezostacks zur Ventilnadelbetätigung ausgenutzt wird. In solchen Fällen bewirkt die bei der Expansion des Piezostacks auf den Dämpfungskolben wirkende Druckkraft eine — im Vergleich zu dem relativ kleinen Gesamtstellweg des Piezostacks von typischerweise 30 µm — merkliche Verschiebung des Dämpfungskolbens, zumal eine Teilmenge des in dem Dämpfungsraum befindlichen Kraftstoffes nahezu ungedrosselt und damit sehr schnell über die Verbindungsleitung zum Kraftstoffzulauf ausgeschoben werden kann. Selbst bei starker Drosselung des Kraftstoffabflusses lässt sich eine momentane Verschiebung des Dämpfungskolbens durch den expandierenden Piezostack nur bei sehr grosser Menge des Dämpfungskolbens einigermassen verhindern. Diese grosse Masse bedingt jedoch einen relativ grossen Bauraum, was wiederum der angestrebten Kleinvolumigkeit des Zumessventils im Wege steht. Eine, wenn auch nur äusserst geringe Verschiebung der gehäuseseitigen Festlegung des Piezostacks während der Zumessphase lässt bei den kleinen Stellwegen des Piezostacks keine hochgenaue und verlässig reproduzierbare Zumessdosierung zu.

### Vorteile der Erfindung

Das erfindungsgemässe Zumessventil mit den kennzeichnenden Merkmalen des Anspruchs 1 hat demgegenüber den Vorteil, dass auch bei Verwendung eines piezoelektrischen Stellgliedes, das den Stellweg durch Expansion des Piezostacks generiert, unter Beibehaltung des Vorteils der Kompensation von Temperatureinflüssen, Verschleiss und Fertigungstoleranzen eine sehr hohe Genauigkeit und vor allem zuverlässige Reproduzierbarkeit von exakt gleichen Ventilnadelhüben erreicht wird. Damit kann eine sehr genaue Zumessdosierung auch von kleinen Zumessmengen vorgenommen werden, wie sie bei Kraftstoff-Einspritzsystemen in Brennkraftmaschinen gefordert wird. Durch das gekapselte Flüssigkeitsdämpfungssystem mit dem Flüssigkeitspolster und der damit über sehr kleine Drosselspalte verbundenen Ausgleichskammer lässt sich ein völlig gasfreies Flüssigkeitspolster sicherstellen, das gegenüber kurzzeitigen dynamischen Druckeinflüssen, wie sie durch die Expansion des Piezostacks bei Anlegen einer Erregerspannung erzeugt werden, völlig inkompressibel und volumenkonstant ist. Damit liegt der Dämpfungskolben und dadurch der Piezostack bei Ventilbetätigung stationär fest. Die Masseträgheit des Dämpfungskolbens spielt dabei keine nennenswerte Rolle, so dass dieser relativ klein bemessen und damit das Bauvolumen des Zumessventils gering gehalten werden kann. Quasistatische Vorgänge, wie Längenänderungen des Piezostacks, der Ventilnadel oder des Dämpfungskolbens durch Temperatureinflüsse, Verschleiss und Fertigungstoleranzen bewirken hingegen durch Flüssigkeitsverdrängung über die Drosselspalte eine Verschiebung des Dämpfungskolbens und damit deren Kompensation, so dass dadurch der konstante Stellweg des Piezostacks nicht beeinflusst werden kann.

Durch die in den weiteren Ansprüchen aufgeführten Massnahmen sind vorteilhafte Weiterbildungen und Verbesserungen des im Anspruch 1 angegebenen Zumessventils möglich.

Die in Anspruch 2 angegebene Ausführungsform der Erfindung stellt in Verbindung mit den Ausführungsformen gemäss den weiteren Ansprüchen eine zweckmässige Realisierung des Dämpfungssystems für den Piezostack dar, die ein kleines Bauvolumen des Zumessventils ermöglicht.

### Zeichnung

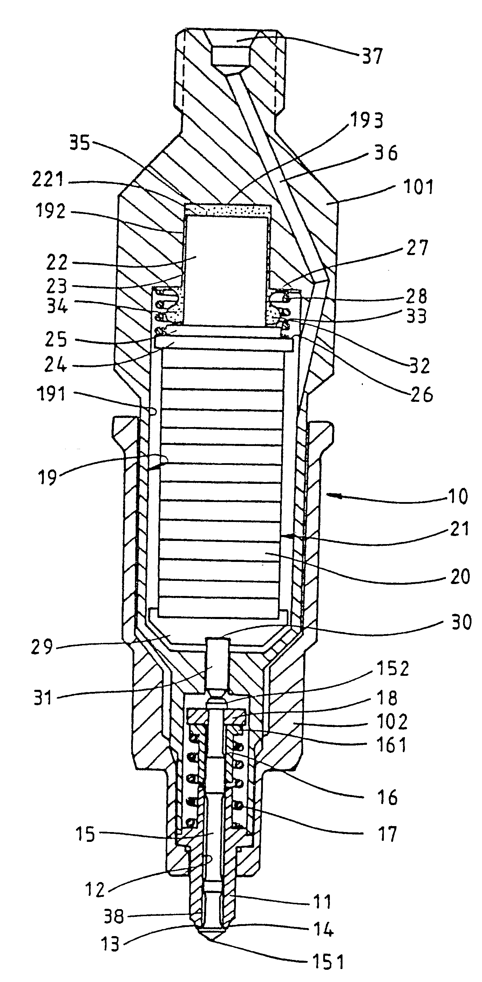

Die Erfindung ist anhand eines in der Zeichnung dargestellten Ausführungsbeispiels in der nachfolgenden Beschreibung näher erläutert. Dabei zeigt die Zeichnung einen Längsschnitt eines Einspritzventils für einen direkt einspritzenden Dieselmotor.

### Beschreibung des Ausführungsbeispiels

Das in der Zeichnung im Längsschnitt zu sehende Einspritzventil für einen direkt einspritzenden Dieselmotor als Beispiel für ein Zumessventil zur Dosierung von Flüssigkeiten oder Gasen weist ein zweiteiliges Ventilgehäuse 10 auf, dessen Oberteil 101 in das Unterteil 102 hineingesteckt ist. Zwischen Oberteil 101 und Unterteil 102 ist ein Ventilkörper 11 gehalten. Der Ventilkörper 11 weist eine axiale Durchgangsbohrung 12 auf, die an dem aus dem Unterteil 102 herausragenden Ende des Ventilkörpers 11 mit einer Zumess- oder Ventilöffnung 13 mündet. Die Ventilöffnung 13 ist von einem Ventilsitz 14 umgeben, der zur Freigabe bzw. zum Verschliessen der Ventilöffnung 13 mit einem pilzartig ausgeformten Kopf 151 einer in der Durchgangsbohrung 12 geführten Ventilnadel 15 zusammenwirkt. Kopf 151 und Ventilöffnung 13 geben einen Spritzwinkel von ungefähr 150° frei, über welchen Kraftstoff in den Brennraum der Brennkraftmaschine eingespritzt wird.

Das aus dem Ventilkörper 11 weit herausragende, vom Ventilsitz 14 abgekehrte Ende der Ventilnadel 15 ist in einer auf der Ventilnadel 15 axial verschieblichen Hülse 16 geführt, die einen einstückigen Ringflansch 161 trägt. Zwischen dem Ringflansch 161 der Hülse 16 und dem Ventilkörper 11 stützt sich eine als Druckfeder ausgebildete Ventilschliessfeder 17 ab, wodurch die Hülse 16 über eine Stützscheibe 18 an einem verdickten Ende 152 der Ventilnadel 15 anliegt. Durch den von der Ventilschliessfeder 17 über die Hülse 16 und die Stützscheibe 18 auf die Ventilnadel 15 aufgebrachte Druck wird letztere mit ihrem Kopf 151 auf den Ventilsitz 14 aufgepresst und verschliesst die Ventilöffnung 13.

Der Oberteil 101 des Ventilgehäuses 10 weist eine im Durchmesser gestufte axiale Sackbohrung 19 mit einem Bohrungsabschnitt 191 und einem im Durchmesser reduzierten Bohrungsabschnitt 192 auf, der mit dem Bohrungsgrund 193 abgeschlossen ist. In dem Bohrungsabschnitt 191 liegt ein Piezostack 20 eines piezoelektrischen Stellgliedes 21 ein, der üblicherweise aus einer Vielzahl von Scheiben besteht. In dem Bohrungsabschnitt 192 mit reduziertem Durchmesser taucht ein Dämpfungskolben 22 ein, dessen Durchmesser derart bemessen ist, dass zwischen der Zylinderwand des Dämpfungskolbens 22 und der Bohrungswand des Bohrungsabschnittes 192 ein nur sehr kleiner Ringspalt 23 verbleibt. Der Dämpfungskolben 22 liegt über zwei treppenartig angeordnete Ringflansche 24, 25, an dem einen Ende des Piezostacks 20 an. Zwischen der Ringschulter 26 des Ringflansches 24 mit dem grösseren Durchmesser und der am Übergang der Bohrungsabschnitte 191, 192 vorhandenen ringförmigen Gehäuseschulter 27 stützt sich eine Druckfeder 28 ab, die den Piezostack 20 in Richtung zur Ventilnadel 15 hin belastet. Das gegenüberliegende Ende des Piezostacks 20 trägt eine Kappe 29 mit einer zentralen Ausnehmung 30. Zwischen der Ausnehmung 30 und dem verdickten Ende 152 der Ventilnadel 15 stützt sich ein Übertragungsbolzen 31 ab, so dass der Piezostack immer in Eingriff mit der Ventilnadel 15 ist. Die Federkraft der Druckfeder 28 ist wesentlich kleiner als die der Ventilschliessfeder 17, so dass letztere die Ventilöffnung 13 zuverlässig geschlossen hält.

An der Ringschulter 32 des im Durchmesser kleineren Ringflansches 25 des Dämpfungskolbens 22 liegt das eine Ende und an der Gehäuseschulter 27 liegt das andere Ende einer ringförmigen Membran 33 jeweils flüssigkeitsdicht an. Die Abstützung der Druckfeder 28 auf der Gehäuseschulter 27 erfolgt dabei über den dort liegenden Rand der Membran 33. Der von der Membran 33 zum Dämpfungskolben 22 hin umschlossene Raum bildet einen Ausgleichsraum 34, während zwischen der Stirnseite 221 des Dämpfungskolbens 22 und dem Bohrungsgrund 193 ein Dämpfungsraum 35 vorgesehen ist. Dämpfungsraum 35 und Ausgleichsraum 34 stehen über den Ringspalt 23 miteinander in Verbindung, der die Wirkung einer Drosselstelle hat. Dämpfungsraum 35, Ringspalt 23 und Ausgleichsraum 34 sind flüssigkeitsgefüllt und hermetisch abgeschlossen.

Der Bohrungsabschnitt 191 mit dem grösseren Durchmesser bildet einen Speicher für den Kraftstoff und ist über eine Zulaufbohrung 36 im Oberteil 101 des Ventilgehäuses 10 mit einem Zulaufanschluss 37 verbunden. Des weiteren steht der Bohrungsabschnitt 191 über eine nicht zu sehende Verbindungsbohrung im Unterteil 102 des Ventilgehäuses 10 mit einem Ringraum 38 im Ventilkörper 11 in Verbindung. Der Ringraum 38 wird unmittelbar von der Ventilöffnung 13 begrenzt.

Die Wirkungsweise des beschriebenen Einspritzventils ist wie folgt:

Bei geschlossenem Ventil steht der Kraftstoff mit einem gesteuerten Druck an der von der Ventilnadel 15 geschlossenen Ventilöffnung 13 an. Wird eine Steuerspannung an den Piezostack 20 gelegt, so vergrössert dieser seine axiale Länge um einen vorbestimmten Betrag, der typischerweise 20 µm beträgt. Diese Längenänderung, die sehr schnell erfolgt, führt über Kappe 29 und Übertragungsbolzen 31 zu einer entsprechenden Verschiebung der Ventilnadel 15, wodurch ihr Kopf 151 von dem Ventilsitz 14 abhebt. Die Verschiebung der Ventilnadel 15 entspricht exakt der Längung des Piezostacks 20, da dieser sich über den Dämpfungskolben 22 auf dem Flüssigkeitspolster im Dämpfungsraum 35 abstützt. Bei den kurzen Schaltzeiten des Piezostacks 20 wird über den drosselnden Ringspalt 23 keine Flüssigkeit aus dem Dämpfungsraum 35 ausgeschoben.

Auftretende Längenänderungen im Piezostack 20 infolge von zunehmender Temperatur im Motor werden hingegen durch den Dämpfungskolben 22 ausgeglichen. Längenänderungen des Piezostacks 20 infolge von Temperaturschwankungen sind langsam ablaufende quasistatische Vorgänge. Dabei hat bei Druck auf dem Dämpfungskolben 22 das Flüssigkeitspolster im Dämpfungsraum 35 die Möglichkeit, langfristig über den stark drosselnden Ringspalt 23 in den Ausgleichsraum 34 abzufliessen. Nach Beendigung des Ausgleichsvorgangs ist der Druck im Ausgleichsraum 34 und im Dämpfungsraum 35 gleich gross und der Piezostack 20 ist wiederum unter Kompensation seiner Längenänderung gehäuseseitig festgelegt. Wird nunmehr der Piezostack 20 wiederum erregt, so wird sein vorgegebener konstanter Stellweg von 20 µm wieder vollständig auf die Ventilnadel 15 übertragen. Eine Auswirkung der Längenänderung des Piezostacks 20 infolge Temperaturschwankungen auf den Stellweg ist damit sicher ausgeschlossen. In der gleichen Weise werden auch Verschleiss oder Fertigungstoleranzen, die zu einer Veränderung der axialen Länge von Dämpfungskolben 22, Piezostack 20, Kappe 29 und Übertragungsbolzen 31 führen ausgeglichen.

Der als Speicherraum dienende Bohrungsabschnitt 191 verhindert beim Einspritzvorgang einen zu starken Druckabfall. Die Schliessung des Einspritzventils erfolgt gegen den Kraftstoffdruck, so dass keine Absteuervolumina oder Leckmengen anfallen. Durch das unmittelbare Einspritzen des Kraftstoffs nach Zumessung durch die Ventilöffnung 13 ist eine gute Zerstäubung des Kraftstoffes gewährleistet.

**Patentansprüche**

1. Zumessventil zur Dosierung von Flüssigkeiten oder Gasen, insbesondere Einspritzventil für Kraftstoffeinspritzsysteme in Brennkraftmaschinen, wie direkt einspritzende Dieselmotoren und dgl., mit einem Ventilgehäuse mit Zumessöffnung, mit einer die Zumessöffnung steuernden Ventilnadel, mit einer die Ventilnadel in ihre die Zumessöffnung sperrende Schliessstellung rückführenden Ventilschliessfeder, mit einem piezoelektrischen Stellglied, dessen unter der Wirkung einer Steuerspannung längenveränderlicher Piezostack an seinem einen Ende mit der Ventilnadel und an seinem anderen Ende mit einem einen flüssigkeitsgefüllten Dämpfungsraum begrenzenden Dämpfungskolben verbunden ist, der in Achsrichtung des Piezostacks axial verschieblich geführt und so ausgelegt ist, dass er bei durch die Steuerspannung bewirkter Längenänderung des Piezostacks relativ zum Gehäuse feststeht, dadurch gekennzeichnet, dass der von der Stirnseite (221) des Dämpfungskolbens (22) begrenzte Dämpfungsraum (35) über mindestens einen Drosselspalt (23) mit einem Ausgleichsraum (34) in Verbindung steht und dass das vom Dämpfungsraum (35), Drosselspalt (24) und Ausgleichsraum (34) zur Verfügung gestellte Volumen flüssigkeitsgefüllt und hermetisch abgeschlossen ist.

2. Zumessventil nach Anspruch 1, dadurch gekennzeichnet, dass das Ventilgehäuse (10) eine im Durchmesser gestufte axiale Sackbohrung (19) aufweist, dass in dem im Durchmesser reduzierten Bohrungsabschnitt (192) mit Bohrungsgrund (193) der Dämpfungskolben (22) verschieblich geführt ist, wobei der Dämpfungsraum (35) von dem Bohrungsgrund (193) und der diesem zugekehrten Stirnseite (221) des Dämpfungskolbens (22) begrenzt und der Drosselspalt (24) von dem axialen Ringspalt (23) zwischen Dämpfungszylinder (22) und Bohrungswand gebildet ist, dass der Dämpfungskolben (22) in den Bohrungsabschnitt (191) mit dem grösseren Durchmesser hineinragt und dass eine Membran (33) einerseits an einer am Übergang der Bohrungsabschnitte (191, 192) vorhandenen ringförmigen Gehäuseschulter (27) und andererseits an dem Dämpfungskolben (22) jeweils flüssigkeitsdicht anliegt.

3. Zumessventil nach Anspruch 2, dadurch gekennzeichnet, dass der Dämpfungskolben (22) auf seinem dem Piezostack (20) zugekehrten Ende zwei treppenartig angeordnete Ringschultern (26, 32) aufweist, dass zwischen der äusseren Ringschulter (26) und der Gehäuseschulter (27) sich eine den Piezostack (20) an die Ventilnadel (15) andrückende Druckfeder (28) abstützt und dass an der inneren Ringschulter (32) der eine Membranrand befestigt ist.

4. Zumessventil nach Anspruch 3, dadurch gekennzeichnet, dass die Abstützung der Druckfeder (28) an der Gehäuseschulter (27) unter Zwischenlage des anderen Membranrandes erfolgt.

5. Zumessventil nach Anspruch 3 oder 4, dadurch gekennzeichnet, dass die gehäuseseitig sich abstützende Ventilschliessfeder (17) an einer an dem von der Zumessöffnung (13) abgekehren Ende der Ventilnadel (15) mit dieser in Eingriff stehenden Stützscheibe (18) mit einer zum Piezostack (20) hin gerichteten Anpresskraft anliegt.

6. Zumessventil nach einem der Ansprüche 2-5, dadurch gekennzeichnet, dass der Bohrungsabschnitt (191) mit dem grösseren Durchmesser den Piezostack (20) unter Bildung eines Flüssigkeitsspeicherraumes aufnimmt, der einerseits mit einer Zuleitung (36) und andererseits mit einem der Zumessöffnung (13) in Fliessrichtung der Flüssigkeit vorgelagerten Ringraum (38) verbunden ist.

**Claims**

1. Dosing valve for fluids or gases, in particular an injection valve for fuel injection systems in internal-combustion engines such as direct-injection diesel engines and the like, comprising a valve housing having a dosing opening, a valve needle controlling the dosing opening, a valve closing spring returning the valve needle into its closing position blocking the dosing opening, a piezoelectric actuator whose piezostack, which is variable in length under the action of a control voltage, is connected at one of its ends to the valve needle and at its other end to a damping piston which defines a fluid-filled damping space and is guided in an axially displaceable manner in the axial direction of the piezostack and is designed in such a way that it is fixed relative to the housing when the control voltage produces a change in length in the piezostack, characterized in that the damping space (35) defined by the end face (221) of the damping piston (22) is connected to a compensating space (34) via at least one throttle gap (23), and that the volume made available by damping space (35), throttle gap (24) and compensating space (34) is fluid-filled and sealed off hermetically.

2. Dosing valve according to Claim 1, characterized in that the valve housing (10) has an axial blind bore (19) stepped in diameter, that the damping piston (22) is displaceably guided in the bore section (192) reduced in diameter and having a bore base (193), the damping space (35) being defined by the bore base (193) and the end face (221) of the damping piston (22) facing the latter, and the throttle gap (24) being formed by the axial annular gap (23) between damping cylinder (22) and bore wall, that the damping piston (22) protudes into the bore section (191) of larger diameter, and that a diaphragm (33) in each case bears fluid-tight on one side against an annular housing shoulder (27), present at the transition between the bore sections (191, 192), and on the other side against the damping piston (22).

3. Dosing valve according to Claim 2, characterized in that the damping piston (22), on its end facing the piezostack (20), has two annular shoulders (26, 32) arranged step-like, that a compression spring (28) pressing the piezostack (20) against the valve needle (15) is supported between the outer annular shoulder (26) and the housing shoulder (27), and that one diaphragm edge is fixed to the inner annular shoulder (32).

4. Dosing valve according to Claim 3, characterized in that the compression spring (28) is supported against the housing shoulder (27) with the other diaphragm edge in between.

5. Dosing valve according to Claim 3 or 4, characterized in that, at the end of the valve needle (15) remote from the dosing opening (13), the valve closing spring (17) supported on the housing side, with a contact pressure directed towards the piezostack (20), bears against a supporting disc (18) engaged with the valve needle (15).

6. Dosing valve according to any of Claims 2 to 5, characterized in that the bore section (191) of larger diameter accommodates the piezostack (20) while forming a fluid reservoir space which is connected on one side to a supply line (36) and on the other side to an annular space (38) located in front of the dosing opening (13) in the flow direction of the fluid.

**Revendications**

1. Soupape de mesure pour doser les fluides ou les gaz, en particulier soupape d'injection pour systèmes d'injection de carburant dans des moteurs à combustion interne, tels que les moteurs Diesel à injection directe et similaire, avec un carter de soupape possédant un orifice de mesure, avec un pointeau de soupape commandant l'orifice de mesure, avec un ressort de fermeture de soupape ramenant le pointeau de soupape en position de fermeture, dans laquelle il obture l'orifice de mesure, avec un organe de réglage piézo-electrique, dont le piezoélément, dont la longueur est modifiable sous l'action d'une tension de commande, est relié au pointeau de soupape à une extrémité et à un piston d'amortissement délimitant une enceinte d'amortissement remplie de liquide à l'autre extrémité, qui est guidée de manière décalable axialement dans la direction de l'axe du piezoélément et est déterminé de telle sorte qu'il est fixe par rapport au carter lors de la variation de longueur du piezoélément, provoquée par la tension de commande, caractérisé en ce que l'enceinte d'amortissement (35) qui est délimitée du côté frontal (221) du piston d'amortissement (22) est reliée par au moins une fente d'étranglement (23) à l'enceinte d'équilibrage (34) et que le volume créé par l'enceinte d'amortissement (35), la fente d'étranglement (24) et l'enceinte d'équilibrage (34) est remplie de liquide et fermée de manière hermétique.

2. Soupape de mesure selon la revendication 1, caractérisé en ce que le carter de soupape (10) possède un trou borgne (19) qui est étagé axialement en diamètre, que le piston d'amortissement (22) est guidé de manière décalable dans la section d'alésage (192) à fond d'alésage (193), qui est réduite en diamètre, l'enceinte d'amortissement (35) étant à cette occasion délimitée par le fond d'alésage (193) et le côté frontal (221) du piston d'amortissement (22) qui est tourné vers lui et que la fente d'étranglement (24) est formée de la fente annulaire (23) située entre cylindre d'amortissement (22) et paroi d'alésage, que le piston d'amortissement (22) émerge dans la section d'alésage (191) possédant le diamètre le plus grand et qu'une membrane (33) s'appuie de manière étanche, d'un côté sur un épaulement de carter (27) de forme annulaire existant à une transition des sections d'alésage (191, 192) et de l'autre côté sur le piston d'amortissement (22).

3. Soupape de mesure selon la revendication 2, caractérisé en ce que le piston d'amortissement (22) possède un épaulement annulaire (26, 32) disposé en forme d'escalier sur son extrémité qui est tournée vers le piezoélément (20), qu'un ressort de pression (28) s'appuie entre l'épaulement annulaire extérieur (26) et l'épaulement de carter (27), en appuyant le piezoélément (20) sur le pointeau de soupape (15) et qu'une bordure de membrane est fixée sur l'épaulement annulaire (32) intérieur.

4. Soupape de mesure selon la revendication 3, caractérisé en ce que l'appui du ressort de pression (28) s'effectue sur l'épaulement de carter (27), en intercalant l'autre bordure de membrane.

5. Soupape de mesure selon la revendication 3 ou 4, caractérisé en ce que le ressort de fermeture de soupape (17) qui s'appuie côté carter appuie sur une extrémité du pointeau de soupape (15) qui est opposée à l'orifice de mesure (13), avec un disque d'appui (18) qui est en prise avec lui et avec une force de pression qui est dirigée vers le piezoélément (20).

6. Soupape de mesure selon l'une des revendications 2 à 5, caractérisé en ce que la section d'alésage possédant le plus grand diamètre reçoit le piezoélément (20) en formant une enceinte d'accumulation de liquide, qui est reliée d'un côté à une conduite d'amenée (36) et de l'autre côté à une enceinte annulaire (38) qui est située en amont de l'orifice de mesure (13) dans la direction d'écoulement du liquide.